# EUROPÄISCHE PATENTSCHRIFT

(11) **EP 1 891 351 B1**
(45) Veröffentlichungstag und Bekanntmachung des Hinweises auf die Patenterteilung: **25.03.2015**
(21) Anmeldenummer: 06754135.9
(22) Anmeldetag: 06.06.2006
(51) Int. Cl.: F16F 9/05

(54) **TAUCHKOLBEN AUS KUNSTSTOFF FÜR EINE LUFTFEDER**
PLUNGER PISTON MADE FROM PLASTIC FOR AN AIR SPRING
PISTON PLONGEUR EN PLASTIQUE CONÇU POUR UN RESSORT PNEUMATIQUE

(30) Priorität: 07.06.2005 DE 102005026314
(43) Veröffentlichungstag der Anmeldung: 27.02.2008
(73) Patentinhaber: LKH-Kunststoffwerk GmbH & Co. KG, 35708 Haiger (DE)
(72) Erfinder: EISE, Martin, 63679 Schotten (DE); ASSMANN, Jörg, 35764 Sinn (DE)
(74) Vertreter: Tönhardt, Marion
(86) Internationale Anmeldenummer: PCT/EP2006/005359
(87) Internationale Veröffentlichungsnummer: WO 2006/131299

(56) Entgegenhaltungen:
- EP-A- 1 041 308
- DE-A1- 19 720 776
- US-A- 5 060 916
- US-B1- 6 527 259

## Beschreibung

Die Erfindung betrifft einen Tauchkolben für eine Luftfeder, die zwischen einem abzufedernden Bauteil und einem federnden Bauteil wirksam ist, wobei der Tauchkolben als Hohlkörper ausgebildet ist, der am unten liegenden Tauchkolbenende mit dem federnden Bauteil und am oben liegenden Tauchkolbenboden mit einem mit Druckluft beaufschlagbaren Luftfederbalg verbunden ist, der wiederum mit dem abzufedernden Bauteil verbunden ist und an der Außenseite des Tauchkolbenmantels bei Federbewegungen abrollt, wobei das unten liegende Tauchkolbenende offen ausgebildet und mit einem am Randbereich dieser Öffnung umlaufenden Verstärkungselement versehen ist. Das Verstärkungselement stellt eine ausreichende Formstabilität sicher und bietet einen Schutz gegen unerwünschte Verformungen und Rissbildungen. Die nachträgliche Montage einer zusätzlichen Versteifungseinrichtung wie beispielsweise einer Platte kann entfallen, so dass der Montageaufwand minimiert ist. Zudem kann zusätzliches Montagematerial eingespart werden, wodurch die Materialkosten reduziert werden.

Um die Material- und Herstellungskosten niedrig zu halten, besteht der Tauchkolben zumindest teilweise aus Kunststoff, wobei das Verstärkungselement zumindest teilweise in den Kunststoff eingebettet ist. Dabei kann beispielsweise ein Press- oder ein Spritzgussverfahren als verfahrenstechnisch einfaches Herstellungsverfahren angewendet werden. Zu diesem Zweck lässt sich das Verstärkungselement vor dem Spritzgießen oder Pressen auf einfache Weise in die Werkzeugform einlegen und wird im anschließenden Prozess im Kunststoff ummantelt. Ein entsprechender Tauchkolben ist aus der nachveröffentlichten EP 1 724 490 A1 bekannt. Entsprechende Vorrichtungen sind auch aus der EP 1041308 A1 sowie aus der US 5060916 A bekannt.

Eine derartige Luftfeder ist zwischen einem abzufedernden Bauteil, insbesondere dem Fahrzeugrahmen und einem federnden Bauteil, insbesondere dem Achsträger eines Kraftfahrzeugs wirksam, Der Tauchkolben ist als Hohlkörper ausgebildet, der am unten liegenden Tauchkolbenende mit dem federnden Bauteil und am oben liegenden Tauchkolbenboden mit einem mit Druckluft beaufschlagbaren Luftfederbalg verbunden ist. Der Luftfederbalg ist wiederum mit dem abzufedernden Bauteil verbunden und rollt an der Außenseite des Tauchkolbenmantels bei Federbewegungen ab.

Derartige Luftfedern kommen insbesondere bei Nutzfahrzeugen aber auch bei Maschinen zum Einsatz, bei denen zwei zueinander bewegliche Bauteile gegeneinander abgefedert werden müssen. Durch den in den Luftfederbälgen veränderbaren Luftdruck lässt sich die Federwirkung beeinflussen.

Bei den bekannten Luftfedern ergibt sich die Schwierigkeit, dass insbesondere aufgrund von Konstruktionsbedingungen oder auch aufgrund von Bauraumbeschränkungen der Tauchkolben, an dem das untere Ende des Luftfederbalgs angebracht ist, nicht vollflächig am federnden Bauteil, beispielsweise dem Achsträger, aufliegt. Dies führt bei der Montage zu Problemen hinsichtlich der funktionssicheren Anbringung.

Da ein bekannter Tauchkolben als ein Hohlkörper ausgebildet ist, können sich bei ungünstigen Einbauverhältnissen bei der Anlage des unteren offenen Tauchkolbenendes am Achsträger weiterhin Spannungsprobleme ergeben. Diese treten insbesondere im Bereich der Auflagefläche des unteren Endes des Tauchkolbens am federnden Bauteil auf. In der Folge kann es zu Verformungen oder gar Rissbildungen und Scherbrüchen am Tauchkolben kommen, so dass nicht mehr sicher gewährleistet ist, dass der Luftfederbalg bei Federbewegungen an der Außenseite des Tauchkolbenmantels richtig abrollt. Zudem ist ein ungewollt deformierbarer Tauchkolben nicht in der Lage, eine ausreichende Kraftübertragung und Kraftverteilung zwischen dem Luftfederbalg und dem federnden Bauteil sicherzustellen. Eine zufrieden stellende Federwirkung der Luftfeder ist jedenfalls nicht sichergestellt.

Um diesen Schwierigkeiten zu entgehen, ist beispielsweise bei einer Luftfeder, wie sie in der DE 197 20 776 A1 oder der DE 197 33 281 A1 beschrieben ist, bekannt, das untere, kreisrunde offene Ende des Tauchkolbens, das dem federnden Bauteil zugewandt ist, unmittelbar mit einer kreisförmigen Metallplatte zu versehen. Die Platte ist mittels einer Schraubverbindung fest mit dem Tauchkolben verbunden. Diese Platte dient zum einen dazu, das offene Ende des Tauchkolbens insbesondere in der Plattenebene gegen Verformungen zu schützen und trägt gleichzeitig dazu bei, die Formstabilität des gesamten Tauchkolbens zu gewährleisten. Zum anderen dient die Platte dazu, eine Befestigungsmöglichkeit zwischen dem Tauchkolben und dem federnden Bauteil zu schaffen. Zu diesem Zweck wird die Platte mit Schrauben versehen.

Die bei der bekannten Luftfeder am Tauchkolben montierte Platte stellt ein Montageteil dar, das zusätzlich an dem Tauchkolben angebracht werden muss. Hierdurch werden die Herstellungs- und Materialkosten in unerwünschter Weise erhöht.

Es ist daher Aufgabe der Erfindung, einen Tauchkolben für eine Luftfeder anzugeben, der auf einfache Weise kostengünstig herzustellen ist und dennoch eine ausreichende Formstabilität aufweist und damit einen Schutz gegen unerwünschte Verformungen und Rissbildungen schafft. Darüber hinaus soll der erfindungsgemäße Tauchkolben eine zuverlässige Kraftübertragung und Kraftverteilung zwischen dem Luftfederbalg und dem federnden Bauteil sicherstellen. Schließlich sollen die Außenabmessungen des Tauchkolbens im Hinblick auf möglicherweise begrenzten Einbauraum gering gehalten werden.

Diese Aufgabe der Erfindung wird durch einen Tauchkolben gemäß den Merkmalen des Anspruchs 1 gelöst. Vorteilhafte Weiterbildungen sind jeweils in den Unteransprüchen beschrieben.

Demgemäß ist das Verstärkungselement am inneren Randbereich der Öffnung angeordnet. Dabei kann in herstellungstechnisch einfacher Weise die Öffnung kreisrund und das Verstärkungselement als Ringelement ausgebildet sein. Ein derartiges ringförmiges Verstärkungselement bietet einen besonders stabilen Schutz gegen Verformungen.

Wenn Teile des Verstärkungselements freiliegen und Umwelteinflüssen ausgesetzt sind, kann das Verstärkungselement aus einem korrosionsfesten Material, insbesondere korrosionsfestem Stahl bestehen. Denkbar ist auch die Verwendung eines Verstärkungsmaterials aus Kunststoff oder eines anorganischen Materials, beispielsweise Glasfasern.

Alternativ kann das Verstärkungselement vollständig von dem Kunststoff umgeben sein. Dann kann das Verstärkungselement auch aus einem nicht korrosionsfesten Metall bestehen.

Um die Montage des Tauchkolbens an dem federnden Bauteil besonders einfach zu gestalten und gleichzeitig die Formstabilität des Tauchkolbens weiter zu verbessern, kann im Inneren des hohlen Tauchkolbens ein Stützbolzen angeordnet sein. Dieser erstreckt sich in Richtung vom oben liegenden Tauchkolbenboden zum unten liegenden Tauchkolbenende, wobei am unteren Ende des Stützbolzens eine Schraubeinrichtung zur Montage des Tauchkolbens am federnden Bauteil angebracht ist.

Zum Schutz vor Korrosion kann der Stützbolzen mit Kunststoff ummantelt sein.

Da der Stützbolzen erst bei der Montage eingeführt wird kann ein bereits vor der Montage hinsichtlich der vertikalen Verformung stabilisierter Tauchkolben dadurch ausgebildet sein, dass um den Stützbolzen ein etwa rohrförmiges Kunststoffteil angeordnet ist; das am oberen Ende mit dem Tauchkolbenboden verbunden ist.

Auf besonders einfache und herstellungstechnisch vorteilhafte Weise kann der Tauchkolbenmantel, der Tauchkolbenboden und die Ummantelung des Stützbolzens bzw. das etwa rohrförmige Kunststoffteil einstückig aus Kunststoff hergestellt sein. Dabei kann insbesondere das kostengünstige Spritzgussverfahren zur Anwendung kommen.

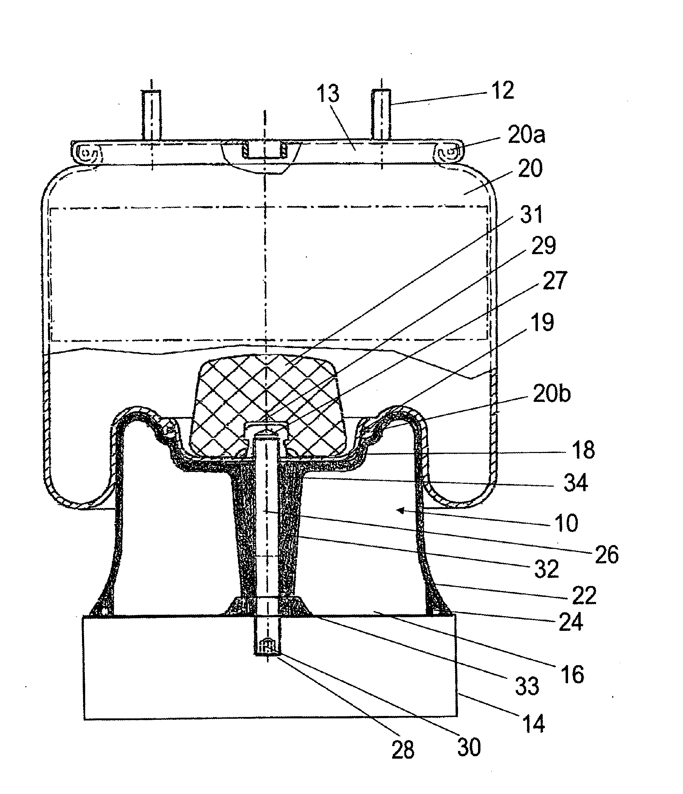

Nachfolgend wird die Erfindung anhand einer bevorzugten Ausführungsform unter Bezugnahme auf die beigefügte Zeichnung näher erläutert.

Die einzige Figur zeigt eine Luftfeder mit einem erfindungsgemäßen Tauchkolben in Seitenansicht und im Schnitt.

Die gezeigte Luftfeder ist zwischen einem nicht näher dargestellten Fahrzeugrahmen 12 und einem nicht näher dargestellten Achsträger 14 eines Nutzfahrzeugs angeordnet. Die Luftfeder weist einen mit Druckluft beaufschlagbaren Luftfederbalg 20 auf, der an seinem oberen Rand 20a mit dem Fahrzeugrahmen 12 verbunden ist. Zu diesem Zweck ist der obere Rand des Luftfederbalgs 20 dichtend an einem Federteller 13 angebracht, welcher wiederum am Fahrzeugrahmen 12 angeschraubt ist.

An seinem unteren Rand 20b ist der Luftfederbalg 20 zwischen dem oben liegenden Tauchkolbenboden 18 des Tauchkolbens 10 und einem Befestigungsteller 19 dichtend eingespannt. Bei Federbewegungen rollt der Luftfederbalg 20 an der Außenseite des Tauchkolbenmantels 22 ab. Im Inneren des Tauchkolbens 10 ist ein Stützbolzen 26 angeordnet, der an seinem oberen Ende 27 mittel einer Schraube 29 mit dem Befestigungsteller 19 und an seinem unteren Ende 28 mittel einer Schraubverbindung 30 mit dem Achsträger 14 verbunden. Die Schraube 29 trägt einen Puffer 31, an dem bei maximaler Einfederung der Luftfeder der Federteller 13 des Luftfederbalgs 20 zur Anlage kommt.

Der Tauchkolben 10 ist aus Kunststoff im Spritzgussverfahren hergestellt und als am unten liegenden Tauchkolbenende 16 offener Hohlkörper mit kreisrunder Öffnung ausgebildet. Am Randbereich der Öffnung ist umlaufend ein ringförmiges Verstärkungselement 24 aus Stahl eingebracht. Bei der Herstellung wird das Verstärkungselement 24 vor dem Spritzgießen in die Spritzgussform eingelegt und beim nachfolgenden Spritzgießen mit eingegossen, so dass das Verstärkungselement 24 vollständig von dem Kunststoff umgeben ist.

Um den Stützbolzen 26 ist ein etwa rohrförmiges Kunststoffteil 32 angeordnet; das am oberen Ende 34 mit dem Tauchkolbenboden 18 verbunden ist. Das Kunststoffteil 32 erweitert sich in Richtung auf sein oberes Ende 34 konusförmig. An seinem unteren Ende bildet das Kunststoffteil 32 einen verbreiterten Anlagebereich 33 für den Achsträger 14. Bei der Montage wird der Stützbolzen durch das etwa rohrförmige Kunststoffteil 32 hindurch gesteckt und einerseits mit dem Befestigungsteller 19 und anderseits mit dem Achsträger 14 verschraubt.

Der Tauchkolbenmantel 22, der Tauchkolbenboden 18 und das etwa rohrförmige Kunststoffteil 32 ist im Spritzgussverfahren einstückig aus Kunststoff hergestellt. Vorteilhafter Weise können in dem von dem Tauchkolben 10 umschlossenen Innenraum einstückig Verstärkungselemente, beispielsweise Verstärkungsrippen, angeformt sein. Aus Gründen der Endformung sind dabei die Verstärkungselemte zum offenen Ende des Tauchkolbens 10 ohne Hinterschnitt ausgebildet. Die Verstärkungselemente können beispielsweise die Innenseite des Tauchkolbenmantels 22 mit dem Tauchkolbenboden und/oder mit dem Kunststoffteil 32 verbinden.

## Patentansprüche

1. Tauchkolben (10) für eine Luftfeder, die zwischen einem abzufedernden Bauteil (12) und einem federnden Bauteil (14) wirksam ist, wobei der Tauchkolben als Hohlkörper ausgebildet ist, der am unten liegenden Tauchkolbenende (16) mit dem federnden Bauteil (14) und am oben liegenden Tauchkolbenboden (18) mit einem mit Druckluft beaufschlagbaren Luftfederbalg (20) verbunden ist, der wiederum mit dem abzufedernden Bauteil (12) verbunden ist und an der Außenseite des Tauchkolbenmantels (22) bei Federbewegungen abrollt, wobei das unten liegende Tauchkolbenende (16) offen ausgebildet und mit einem am Randbereich dieser Öffnung umlaufenden Verstärkungselement (24) versehen ist, wobei der Tauchkolben(10) zumindest teilweise aus Kunststoff besteht und das Verstärkungselement (24) zumindest teilweise in den Kunststoff eingebettet ist, **dadurch gekennzeichnet, dass** das Verstärkungselement (24) am inneren Randbereich der Öffnung angeordnet ist.

2. Tauchkolben nach Anspruch 1, **dadurch gekennzeichnet, dass** die Öffnung kreisrund und das Verstärkungselement (24) als Ringelement ausgebildet ist.

3. Tauchkolben nach einem der Ansprüche 1 oder 2, **dadurch gekennzeichnet, dass** das Verstärkungselement (24) aus einem korrosionsfesten Material besteht.

4. Tauchkolben nach einem der Ansprüche 1 bis 3, **dadurch gekennzeichnet, dass** das Verstärkungselement (24) vollständig von dem Kunststoff umgeben ist.

5. Tauchkolben nach einem der Ansprüche 1 oder 2, **dadurch gekennzeichnet, dass** das Verstärkungselement (24) aus einem nicht korrosionsfesten Metall besteht und vollständig von dem Kunststoff umgeben ist.

6. Tauchkolben nach einem der Ansprüche 1 bis 5, **dadurch gekennzeichnet, dass** im Inneren des hohlen Tauchkolbens (10) ein Stützbolzen (26) angeordnet ist, der sich in Richtung vorn oben liegenden Tauchkolbenboden (18) zum unten liegenden Tauchkolbenende (16) erstreckt, wobei am unteren Ende (28) des Stützbolzens (26) eine Schraubeinrichtung (30) zur Montage des Tauchkolbens (10) am federnden Bauteil (14) angebracht ist.

7. Tauchkolben nach einem der Ansprüche 1 bis 6, **dadurch gekennzeichnet, dass** der Stützbolzen (26) mit Kunststoff ummantelt ist.

8. Tauchkolben nach einem der Ansprüche 1 bis 7, **dadurch gekennzeichnet, dass** um den Stützbolzen (26) ein etwa rohrförmiges Kunststoffteil (32) angeordnet ist, das am oberen Ende (34) mit dem Tauchkolbenboden (18) verbunden ist.

9. Tauchkolben nach Anspruch 7 oder 8, **dadurch gekennzeichnet, dass** der Tauchkolbenmantel (22), der Tauchkolbenboden (18) und die Ummantelung des Stützbolzens oder das etwa rohrförmige Kunststoffteil (32) einstückig aus Kunststoff hergestellt ist.

10. Luftfeder mit einem Tauchkolben (10) nach einem der Ansprüche 1 bis 9.

## Claims

1. A plunger piston (10) for a pneumatics spring, which acts between a resilient component (12) to be sprung, and a second resilient component (14), wherein the plunger piston is designed as a hollow body, whose plunger piston end (16) located at a bottom is connected with the resilient component (14), and at the second plunger piston end (18) located at the top it is connected with a pneumatic spring bellows (20), which can be charged with compressed air, which in turn is connected with the resilient component (12) and rolls off on the exterior of the plunger piston shell (22) in the course of spring movements, wherein the plunger piston end (16) located on the bottom which is embodied to be open and is provided with a reinforcement element (24) running around the edge area of said opening, wherein the plunger piston (10) consists at least in part of a plastic material, and the reinforcement element (24) is at least partially embedded in the plastic material, **characterized in that** the reinforcement element (24) is arranged on the inner edge area of the opening.

2. The plunger piston in accordance with claim 1, **characterized in that** the opening is embodied to be circular, and the reinforcement element (24) is embodied as an annular element.

3. The plunger piston in accordance with claim 1 or 2, **characterized in that** the reinforcement element (24) consists of a corrosion-resistant material.

4. The plunger piston in accordance with one of claims 1 to 3, **characterized in that** the reinforcement element (24) is completely surrounded by the plastic material.

5. The plunger piston in accordance with claim 1 or 2, **characterized in that** the reinforcement element (24) is made of a non-corrosion-resistant material and is completely surrounded by the plastic material.

6. The plunger piston in accordance with one of claims 1 to 5, **characterized in that** a support bolt (26) is arranged in the interior of the hollow plunger piston (10) which extends from the second plunger piston bottom (18) at the top to the plunger piston end (16) located below, wherein a screw arrangement (30) for mounting the plunger piston (10) on the resilient component (14) is attached to the lower end (28) of the support bolt (26).

7. The plunger piston in accordance with one of claims 1 to 6, **characterized in that** the support bolt (26) is encased in a plastic material.

8. The plunger piston in accordance with one of claims 1 to 7, **characterized in that** an approximately tube-shaped plastic part (32) is arranged around the support bolt (26), which is connected at the upper end (34) with the plunger piston bottom (18).

9. The plunger piston in accordance with claim 7 or 8, **characterized in that** the plunger piston shell (22), the plunger piston bottom (18) and the casing of the support bolt, or the approximately tube-shaped plastic part (32) are produced in one piece of plastic material.

10. An air spring having a plunger piston (10) according to one of claims 1 to 9.

## Revendications

1. Piston plongeur (10) pour une suspension pneumatique qui agit entre une pièce à amortir (12) et une pièce amortissante (14), ledit piston plongeur étant réalisé sous forme de corps creux qui au niveau de son extrémité (16) située en bas est relié à la pièce amortissante (14) et au niveau de son fond (18) situé en haut est relié à un soufflet (20), destiné à être sollicité par l'air comprimé, lequel est lui-même relié à la pièce à amortir (12), et à chaque mouvement de la suspension roule sur la face extérieure de la paroi latérale (22) du piston plongeur, l'extrémité (16) du piston plongeur, située en bas, étant réalisée sous forme ouverte et étant munie d'un élément de renfort (24) entourant le bord de cette ouverture, ledit piston plongeur (10) étant réalisé en partie en matière plastique et l'élément de renfort (24) étant incorporé au moins partiellement dans la matière plastique, **caractérisé en ce que** l'élément de renfort (24) est disposé sur le bord intérieur de l'ouverture.

2. Piston plongeur selon la revendication 1, **caractérisé en ce que** l'ouverture est circulaire et l'élément de renfort (24) est réalisé sous forme d'élément annulaire.

3. Piston plongeur selon la revendication 1 ou 2, **caractérisé en ce que** l'élément de renfort (24) est réalisé dans un matériau résistant à la corrosion.

4. Piston plongeur selon l'une quelconque des revendications 1 à 3, **caractérisé en ce que** l'élément de renfort (24) est totalement entouré par la matière plastique.

5. Piston plongeur selon la revendication 1 ou 2, **caractérisé en ce que** l'élément de renfort (24) est réalisé dans un métal non résistant à la corrosion et est totalement entouré par la matière plastique.

6. Piston plongeur selon l'une quelconque des revendications 1 à 5, **caractérisé en ce qu'**à l'intérieur du piston plongeur (10) creux est disposé un boulon de support (26) qui s'étend en direction du fond (18) du piston plongeur, situé en haut à l'avant, vers l'extrémité (16) du piston plongeur, située en bas, un dispositif de vissage (30) pour le montage du piston plongeur (10) sur la pièce amortissante (14) étant attaché à l'extrémité inférieure (28) du boulon de support (26).

7. Piston plongeur selon l'une quelconque des revendications 1 à 6, **caractérisé en ce que** le boulon de support (26) est enveloppé de matière plastique.

8. Piston plongeur selon l'une quelconque des revendications 1 à 7, **caractérisé en ce qu'**autour du boulon de support (26) est disposée une pièce plastique (32) sensiblement tubulaire qui, au niveau de l'extrémité supérieure (34), est reliée au fond (18) du piston plongeur.

9. Piston plongeur selon la revendication 7 ou 8, **caractérisé en ce que** la paroi latérale (22) du piston plongeur, le fond (18) du piston plongeur et l'enveloppe du boulon de support ou la pièce plastique (32) sensiblement tubulaire sont réalisés d'un seul tenant en matière plastique.

10. Suspension pneumatique comportant un piston plongeur (10) selon l'une quelconque des revendications 1 à 9.
